# FASCICULE DE BREVET EUROPEEN

(11) **EP 4 179 309 B1**
(45) Date de publication et mention de la délivrance du brevet: **10.07.2024**
(21) Numéro de dépôt: 21737468.5
(22) Date de dépôt: 30.06.2021
(51) Int. Cl.: G01N 29/34, G01N 29/024, G01N 29/032

(54) **MANCHON TUBULAIRE POUR LA MESURE DE LA VISCOÉLASTICITÉ D'UN PRODUIT À ANALYSER**
ROHRFÖRMIGE HÜLSE ZUR MESSUNG DER VISKOELASTIZITÄT EINES ZU ANALYSIERENDEN PRODUKTS
TUBULAR SLEEVE FOR MEASURING THE VISCOELASTICITY OF A PRODUCT TO BE ANALYSED

(30) Priorité: 10.07.2020 FR 2007317
(43) Date de publication de la demande: 17.05.2023
(73) Titulaire: Rheawave, 37000 Tours (FR)
(72) Inventeur: DEFONTAINE, Marielle, 37000 TOURS (FR); LEBERTRE, Hélène, 37200 TOURS (FR)
(74) Mandataire: Lequien, Philippe
(86) Numéro de dépôt international: PCT/EP2021/068086
(87) Numéro de publication internationale: WO 2022/008326

(56) Documents cités:
- EP-A2- 0 118 840
- US-A1- 2003 051 558

## Description

Le domaine de l'invention est celui de la conception et de la fabrication des dispositifs acoustiques de mesure des propriétés viscoélastiques d'un produit fluide et en particulier, mais non exclusivement, dans les domaines agro-alimentaires ou cosmétiques.

Plus précisément, l'invention concerne un dispositif acoustique pour la mesure localisée et sans contact, de la viscoélasticité d'un produit et, éventuellement, des non-linéarités élastique et dissipative.

Il est connu le document de brevet publié sous le numéro US 2003/051558 A1 qui décrit un dispositif de mesure des débits volumiques de composants en phases liquide et gazeuse, et de détermination de leur concentration volumique dans un mélange multi-phases le long d'une canalisation. Il est également connu le document de brevet publié sous le numéro EP 0 115 840 A2 qui décrit un dispositif pour le calcul des concentrations d'au moins deux constituants gazeux tels que l'hydrogène et la vapeur d'eau dans un mélange gazeux.

Dans le domaine de l'invention, on connaît le dispositif acoustique décrit dans le document de brevet publié sous le numéro EP 2 294 401, conçu pour la mesure localisée et sans contact des non-linéarités élastique et dissipative et de la viscoélasticité d'un échantillon. Le dispositif acoustique décrit comprend :
- un réservoir rempli d'un fluide, prévu pour recevoir l'échantillon à analyser ;
- des moyens d'émission d'une onde acoustique basse fréquence, aptes à créer une variation périodique basse fréquence de la pression hydrostatique dans la région de l'échantillon ;
- des moyens de mesure aptes à mesurer les variations de la pression hydrostatique d'une onde acoustique basse fréquence générée par les moyens d'émission ;
- des moyens de génération d'impulsions ultrasonores haute fréquence ;
- des moyens de réception disposés en vis-à-vis des moyens de génération, pour recevoir les impulsions ultrasonores haute fréquence ayant traversé l'échantillon ;
- un équipement de synchronisation permettant de générer un signal de synchronisation pour synchroniser les mesures des impulsions haute fréquence et de la pression basse fréquence ;
- une unité d'analyse comprenant un module de calcul des non-linéarités élastique et dissipative ainsi que de la viscoélasticité de l'échantillon à partir des modulations du temps de vol et de l'amplitude des impulsions ultrasonores ayant traversé l'échantillon en fonction des variations de la pression dues à l'onde acoustique basse fréquence.

Un tel dispositif présente l'avantage de permettre la mesure des non-linéarités élastique et dissipative et de la viscoélasticité dans des domaines d'application où le contact avec le système de mesure est non souhaitable, tel que l'agro-alimentaire, le cosmétique et les applications biomédicales.

En revanche, cette solution de l'art antérieur n'est applicable qu'à des échantillons prélevés sur une chaîne de production et ne permet donc pas l'analyse en continu du produit en cours de production.

Pour pallier cet inconvénient de l'art antérieur, il a été proposé, en pratique, une solution mécano-acoustique consistant en un support mécanique de forme circulaire sur un ou deux plateaux (formant chacun une couronne), sur lesquels sont fixés des transducteurs ultrasonores, la plupart du temps en vis-à-vis l'un de l'autre. Un telle couronne est conçue pour s'ouvrir en deux et venir se clipser directement sur une canalisation d'une chaîne de production.

Cette solution permet donc l'analyse en continu et en temps réel d'un produit en cours de production.

Toutefois, il a été constaté que la mise en oeuvre de cette solution engendre un certain nombre de difficultés techniques qui conduisent notamment à des imprécisions dans les résultats obtenus.

Une des difficultés rencontrées réside dans la transmission des signaux ultrasonores, qui présentent de très faibles niveaux d'amplitude, et dont la réception peut être parasitée par des échos susceptibles de s'être propagés dans l'épaisseur de la canalisation.

En effet, les impédances acoustiques des faces avant des transducteurs ultrasonores étant la plupart du temps plus proches de l'impédance acoustique des canalisations des chaînes de production (généralement en inox) que de celles du produit soumis à la mesure de viscoélasticité, une partie non négligeable de l'énergie ultrasonore se propage dans l'épaisseur de paroi des canalisations.

Ce phénomène limite la quantité d'énergie se propageant dans le produit analysé. Il en résulte une analyse difficile des signaux ultrasonores reçus (ceci en raison de la multiplicité des échos, avec parfois recouvrement ou superposition) et une forte atténuation des échos d'intérêt, c'est-à-dire ceux ayant traversé le produit à analyser.

Une autre difficulté de la solution en couronne réside dans son intégration sur l'installation de production qui peut amener à des variabilités importantes en matière de sensibilité, ou poser des problèmes d'encombrement, dans des espaces confinés donc peu accessible pour un installateur.

L'invention a notamment pour objectif de pallier ces inconvénients de l'art antérieur.

Plus précisément, l'invention a pour objectif de proposer un dispositif acoustique pour la mesure localisée et sans contact de la viscoélasticité d'un produit à analyser qui supprime, ou à tout le moins limite notablement, l'effet des échos parasites dans l'épaisseur de la canalisation dans laquelle le produit à analyser circule et au travers de laquelle des signaux ultrasonores sont émis et reçus.

L'invention a également pour objectif de fournir un tel dispositif acoustique qui puisse être installé facilement et rapidement sur une canalisation dans laquelle transite le produit à analyser.

En ce sens, l'invention a aussi pour objectif de fournir un tel dispositif acoustique qui soit peu encombrant.

Ces objectifs, ainsi que d'autres qui apparaîtront par la suite, sont atteints grâce à l'invention qui a pour objet un dispositif acoustique pour une mesure, localisée et sans contact, de la viscoélasticité d'un produit à analyser, du type comprenant :
- des moyens de génération d'impulsions ultrasonores haute fréquence ;
- des moyens de réception des impulsions ultrasonores haute fréquence générées par les moyens de génération ; les moyens de génération et les moyens de réception étant disposés l'un par rapport à l'autre de telle sorte que les impulsions ultrasonores haute fréquence se propagent au sein de l'échantillon à analyser ;
caractérisé en ce qu'il comprend un manchon tubulaire de liaison destiné à raccorder ensemble deux portions de canalisation dans laquelle le produit à analyser est destiné à se déplacer d'une portion à l'autre, les moyens de génération et les moyens de réception étant montés sur le manchon tubulaire, le manchon tubulaire comprenant une première zone de montage pour les moyens de génération et une deuxième zone de montage pour les moyens de réception, le manchon tubulaire étant non anéchoïque dans les première et deuxième zones de montage et, selon une répartition circonférentielle, anéchoïque entre les première et deuxième zones de montage.

Ainsi, grâce à l'invention, la propagation des signaux ultrasonores est favorisée au travers de la canalisation, et donc au travers du produit à analyser lui-même, ceci au détriment de la propagation ultrasonore dans l'épaisseur de la paroi elle-même de la canalisation.

En d'autres termes, contrairement à l'art antérieur, l'énergie ultrasonore qui se propage dans l'épaisseur de la paroi de la canalisation est absorbée ou dissipée en quasi-totalité et ne parvient donc pas jusqu'aux moyens de réception. Ainsi, les moyens de réception ne reçoivent essentiellement que l'énergie se propageant dans le produit à analyser, ou quasiment.

Il en résulte une acquisition et donc une analyse plus fiable des signaux ultrasonores reçus, ceux-ci étant moins sujets à être parasités par les échos engendrés par la propagation de l'énergie ultrasonore au travers de la paroi de la canalisation.

La suppression, ou à tout le moins la limitation, des effets parasites des signaux ultrasonores se propageant au travers de la paroi de la canalisation est obtenue par la mise en oeuvre de zones anéchoïque entre la première zone de montage et la deuxième zone de montage, qui permet d'absorber rapidement l'amplitude de l'onde au fur et à mesure de sa propagation, en particulier sur une courte distance. Cette atténuation acoustique peut résulter de plusieurs phénomènes physiques comme l'absorption, la diffusion, la diffraction ou encore des phénomènes de résonnance localisée qui piègent l'énergie ultrasonore spatialement et souvent dans des bandes fréquentielles en lien avec les caractéristiques du réseau diffusant.

Le principe de l'invention consiste donc à concevoir le manchon tubulaire avec deux zones structurellement distinctes, à savoir :
- les zones non anéchoïques, macroscopiquement homogènes (en regard des longueurs d'ondes ultrasonores), tendant à favoriser la propagation des ultrasons vers l'intérieur de la canalisation (et non au sein de la paroi de la canalisation), c'est-à-dire en traversant la canalisation selon le chemin de propagation le plus court ; cette zone est donc acoustiquement non absorbante ;
l'autre zone, atténuante, est donc anéchoïque, de sorte que l'énergie ultrasonore envoyée dans cette zone est dissipée, annihilant tout écho parasite de propagation dans la paroi du manchon tubulaire.

Le choix du ou des matériaux constituant le manchon est en partie guidé par les contraintes rencontrées dans le secteur d'application du manchon selon l'invention, ces contraintes pouvant être liées à la résistance au débit appliqué et/ou au nettoyage industriel. Ainsi, fréquemment, la solution retenue sera de type acier inoxydable, tout autre matériau de la famille des polymères plastiques et élastomères, voire tout autre matériau composite, pouvant être envisagé.

Selon un premier mode de réalisation, le manchon tubulaire s'étend entre deux extrémités selon un axe de déplacement du produit à analyser, les moyens de génération et les moyens de réception étant montés en vis-à-vis l'un de l'autre, perpendiculairement à l'axe de déplacement.

Selon un deuxième mode de réalisation envisageable, le manchon tubulaire s'étend entre deux extrémités selon un axe de déplacement du produit à analyser, les moyens de génération et les moyens de réception étant montés sur le manchon tubulaire de façon diamétralement opposée, les moyens de génération étant disposés selon un axe de génération et les moyens de réception étant disposés selon un axe de réception, l'axe de génération et l'axe de réception étant essentiellement parallèles entre eux.

De telles dispositions permettent, pour certains produits, de favoriser la propagation des signaux ultrasonores au travers du produit plutôt que dans la paroi du manchon tubulaire.

Selon une solution avantageuse, le manchon tubulaire présente un premier méplat dans la première zone de montage, sur lequel sont montés les moyens de génération, et un deuxième méplat dans la deuxième zone de montage, sur lequel sont montés les moyens de réception.

De tels méplats facilitent le montage des transducteurs ultrasonores sur les zones de montage correspondantes, en constituant des zones d'accueil sur lesquelles il est aisé de rapporter les composants.

Selon une autre caractéristique avantageuse, les manchons tubulaires présentent une première cavité dans la première zone de montage, dans laquelle sont montés les moyens de génération, et une deuxième cavité dans la deuxième zone de montage, dans laquelle sont montés les moyens de réception.

De telles cavités forment des sortes de gouttières dans lesquelles sont logés les transducteurs ultrasonores, ce qui peut contribuer à réduire notablement l'encombrement du manchon tubulaire.

Selon un premier mode de réalisation particulier, le manchon tubulaire présente un corps délimitant un évidement interne de circulation du produit à analyser entre les deux portions de canalisation, le corps étant venu de matière avec les première et deuxième zones de montage.

Dans ce cas, le corps présente préférentiellement un rétrécissement d'épaisseur entre les première et deuxième zones de montage.

De cette façon, le rétrécissement de la paroi interne procure les avantages de :
- limiter le plus possible la quantité de matière non anéchoïque entre les première et deuxième zones de montage, qui sont susceptibles de permettre une propagation, même réduite, des signaux ultrasonores de la première zone de montage à la deuxième zone de montage ;
- ménager un volume d'autant plus important que le rétrécissement est marqué, pour disposer la zone anéchoïque entre les première et deuxième zone de montage.

Selon une solution avantageuse de ce mode de réalisation, le manchon tubulaire comprend au moins deux matériaux distincts, dont un matériau non anéchoïque pour les première et deuxième zones de montage, et pour le corps, et un matériau anéchoïque de comblement circonférentiel entre les première et deuxième zones de montage.

Préférentiellement, le matériau anéchoïque est choisi parmi le groupe suivant :
- matériau alvéolaire ;
- matériau stratifié dont les strates composent un gradient d'impédance acoustique ;
- matériau granulaire.

Bien entendu, d'autres matériaux peuvent être envisagés sans sortir du cadre de l'invention, le matériau retenu étant sélectionné pour sa rigidité et sa tenue mécanique, tout en assurant une bonne atténuation ultrasonore, par diffusion multiple, conduisant à une extinction, ou quasiment, de l'énergie reçue.

Selon un deuxième mode de réalisation envisageable, le manchon tubulaire est réalisé en un même matériau dans les première et deuxième zones de montage et entre les première et deuxième zones de montage, le matériau présentant une pluralité de reliefs et/ou de motifs anéchoïques entre les première et deuxième zones de montage.

En d'autres termes, le caractère anéchoïque du matériau entre les première et deuxième zones de montage est obtenu par une mise en forme structurelle, pouvant être obtenue par usinage ou moulage.

Indépendant du mode de réalisation, le dispositif acoustique selon l'invention présente avantageusement à chacune de ses extrémités une collerette d'assemblage.

Une telle caractéristique facilite le montage du manchon tubulaire entre deux portions de canalisation à relier par le manchon, les deux portions présentant chacune à leur extrémité libre une collerette d'assemblage complémentaire de celle du manchon tubulaire.

D'autres caractéristiques et avantages de l'invention apparaîtront plus clairement à la lecture de la description suivante de plusieurs modes de réalisation de l'invention, donnés à titre d'exemples illustratifs et non limitatifs et des dessins annexés parmi lesquels :
- les figures 1 et 2 illustrent de façon schématique un dispositif acoustique de mesure selon un premier mode de réalisation de l'invention, vu respectivement en bout et de côté ;
- les figures 3 et 4 illustrent de façon schématique un dispositif acoustique de mesure selon un deuxième mode de réalisation de l'invention, vu respectivement en bout et de côté ;
- la figure 4b illustre de façon schématique un dispositif acoustique de mesure selon une variante du deuxième mode de réalisation de l'invention
- la figure 5 illustre de façon schématique un dispositif acoustique de mesure selon une variante de réalisation de l'invention, vu en bout ;
- les figures 6 et 7 illustrent de façon schématique un dispositif acoustique de mesure selon un troisième mode de réalisation de l'invention, vu respectivement en bout et de côté.

Tel qu'indiqué précédemment, l'invention concerne un dispositif acoustique pour la mesure, localisée et sans contact, de la viscoélasticité d'un produit à analyser, et est du type comprenant :
- des moyens de génération 1 d'impulsions ultrasonores haute fréquence ;
- des moyens de réception 2 des impulsions ultrasonores haute fréquence générées par les moyens de génération 1.

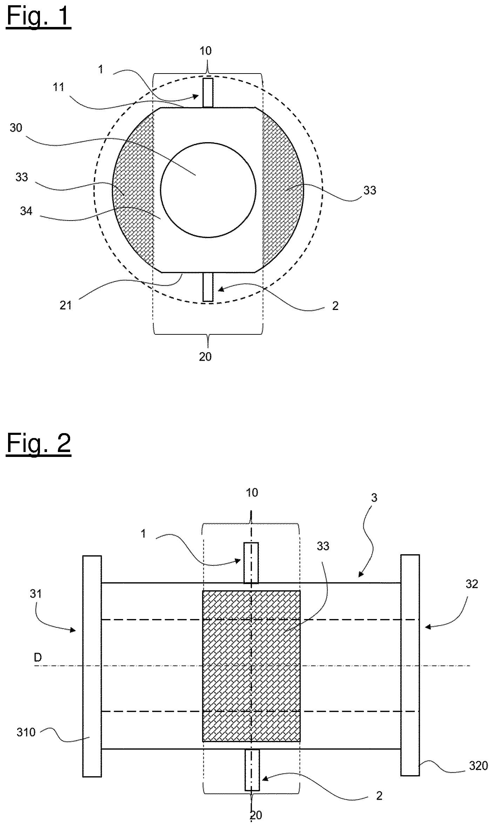

Tel que cela est illustré par les figures 1 et 2, les moyens de génération 1 et les moyens de réception 2 sont, selon le principe de l'invention, montés sur un manchon tubulaire 3, présentant un évidement central 30, ce manchon tubulaire de liaison étant destiné à raccorder ensemble deux portions de canalisations (non représentées) dans lequel le produit à analyser est destiné à se déplacer d'une portion à l'autre, en transitant par l'évidement central 30 du manchon tubulaire de liaison.

Les impulsions ultrasonores haute fréquence présentent préférentiellement les caractéristiques suivantes :
- gamme de fréquence : 50 kHz à 50 MHz ;
- type d'impulsion ultrasonore : longitudinal (ou compression), transversal (ou cisaillement) et onde de torsion ;
- modalités : onde impulsionnelle, train d'onde continu ou transitoire ;
émetteur et récepteur : tout type de générateur d'impulsions ultrasonore peut être envisagé.

Tel que cela apparaît sur la figure 1, les moyens de génération 1 et les moyens de réception 2 sont disposés l'un par rapport à l'autre de telle sorte que les impulsions ultrasonores haute fréquence se propagent au sein de l'échantillon analysé qui transite dans l'évidement central 30 du manchon tubulaire de liaison.

Un tel dispositif acoustique pour la mesure de la viscoélasticité d'un produit à analyser est destiné à être associé avec des moyens de calculs et d'analyse de la viscoélasticité à partir des impulsions ultrasonores haute fréquence captées par les moyens de réception.

De plus, un tel dispositif acoustique est avantageusement couplé à des moyens d'émission d'une onde acoustique basse fréquence apte à créer une variation périodique basse fréquence de la pression hydrostatique du produit à analyser, et des moyens de mesures aptes à mesurer les variations de la pression hydrostatique dues à l'onde acoustique basse fréquence. Le fait de générer une variation de la pression hydrostatique dans le produit à analyser à l'aide de l'onde acoustique basse fréquence interagissant de manière synchronisée, dans le produit à analyser, avec une onde ultrasonore permet d'obtenir une mesure instantanée des effets viscoélastiques et des effets non linéaires élastique et dissipatif dans le produit analysé.

L'utilisation d'une onde acoustique basse-fréquence pour générer les variations de la pression hydrostatique dans le milieu permet d'étudier en dynamique les effets non linéaires acoustiques pendant les phases successives de dilatation et de compression de l'échantillon.

Le traitement des impulsions ultrasonores haute fréquence reçues par les moyens de réception est décrit par les moyens et par un algorithme, tels que ceux explicités dans le document de brevet publié sous le numéro EP 2 294 401, sans que ces moyens et algorithme soient exclusifs d'autres techniques de traitement.

Selon le principe de l'invention, les moyens de génération 1 sont montés dans une première zone de montage 10 du manchon tubulaire de liaison et les moyens de réception 2 sont montés dans une deuxième zone de montage 20 du manchon tubulaire de liaison.

En outre, le manchon tubulaire est non anéchoïque dans les première et deuxième zones de montage 10, 20 tandis que, selon une répartition circonférentielle, le manchon tubulaire est anéchoïque entre les première et deuxième zone de montage 10, 20, c'est-à-dire dans les zones anéchoïques 33 apparaissant sur les figures 1 et 2.

En référence aux figures 2, 4 et 7, le manchon tubulaire de liaison s'étend axialement entre deux extrémités 31, 32 définissant entre elles un axe de déplacement D du produit à analyser, l'évidement central 30 du manchon s'étendant de façon débouchante d'une extrémité à l'autre.

Chaque extrémité 31, 32 présente une collerette d'assemblage 310, 320, prévue pour permettre l'assemblage du manchon tubulaire de liaison chacune avec une portion de canalisation dans laquelle le produit à analyser est destiné à se déplacer d'une portion à l'autre. Les collerettes 310, 320 présentent des moyens appropriés, et en particulier une pluralité d'alésages, pour permettre la solidarisation du manchon avec les portions de canalisation, par exemple par vissage/boulonnage.

Selon le mode de réalisation illustré par les figures 1 et 2, le manchon tubulaire est cylindrique entre les collerettes 310 et 320, l'évidement 30 étant lui aussi cylindrique, ceci avec pour axe central l'axe de déplacement D.

Dans cette configuration, les moyens de génération 1 et les moyens de réception 2 sont montés en vis-à-vis l'un de l'autre, de façon diamétralement opposée, c'est-à-dire perpendiculairement à l'axe de déplacement D.

Selon une autre caractéristique de ce mode de réalisation illustré par la figure 1, le manchon tubulaire présente un premier méplat 11 dans la première zone de montage 10, les moyens de génération 1 étant montés sur ce méplat 11. De plus, le manchon tubulaire présente un deuxième méplat 21 dans la deuxième zone de montage 20, les moyens de réception 2 étant montés sur ce deuxième méplat 21.

Tel que cela apparaît sur la figure 2, la zone anéchoïque du manchon tubulaire s'étend longitudinalement selon l'axe de déplacement D dans la même portion du manchon que les zones de montage.

Dans cette portion longitudinale, et tel qu'illustré par la figure 1, les zones anéchoïques 30 sont diamétralement opposées et présentent chacune la forme d'une portion de cylindre de façon à encadrer circonférentiellement les première et deuxième zone de montage.

Pour cela, le manchon tubulaire présente un corps 34 délimitant l'évidement central 30 prévu pour permettre la circulation du produit à analyser entre les deux portions de canalisations auxquelles le manchon est destiné à être raccordé. Ce corps 34 est venu de matière avec la première zone de montage et la deuxième zone de montage, en une matière non anéchoïque. De plus, le corps 34 présente, dans la longueur des zones de montage selon l'axe de déplacement D, un rétrécissement (340) d'épaisseur entre les première et deuxième zones de montage.

Dans cette configuration, le manchon tubulaire est constitué de deux matériaux distincts, dont un matériau non anéchoïque pour les première et deuxième zones de montage ainsi que pour le corps 34, et un matériau anéchoïque de comblement circonférentiel entre les première et deuxième zone de montage, c'est-à-dire dans les zones anéchoïques 33 illustrées sur la figure 1.

La solidarisation des deux matériaux, non anéchoïques et anéchoïques, est réalisée par toute technique appropriée. A ce titre, les deux matériaux peuvent être vissés l'un à l'autre ou collés de façon chimique.

Le matériau anéchoïque est préférentiellement un matériau accepté par les normes d'hygiène et de sécurité de l'industrie agro-alimentaire, tel que les aciers inoxydables ou certains polymères ou composites. Il est également possible d'utiliser d'autres matériaux tels que le verre.

Le matériau anéchoïque est quant à lui choisi parmi les groupes suivants :
- matériau alvéolaire ;
- matériau stratifié dont les strates composent un gradient d'impédances acoustiques ;
- matériau granulaire.

Plus précisément, le matériau anéchoique peut être choisi parmi les matériaux suivants :
- mousse solide ;
- architecture trabéculaire métallique ;
- granulat ou billes d'élastomère ;
- sable ;
   caoutchouc naturel ou synthétique, chargé (microbilles, poudre, billes...), structuré (mousses) ou composites ;
- matériau obtenu par impression 3D (plastique, métaux, divers alliages, verre, céramique...)

On décrit ci-après différentes variantes de réalisation d'un dispositif acoustique pour la mesure localisée et sans contact de la viscoélasticité d'un produit à analyser.

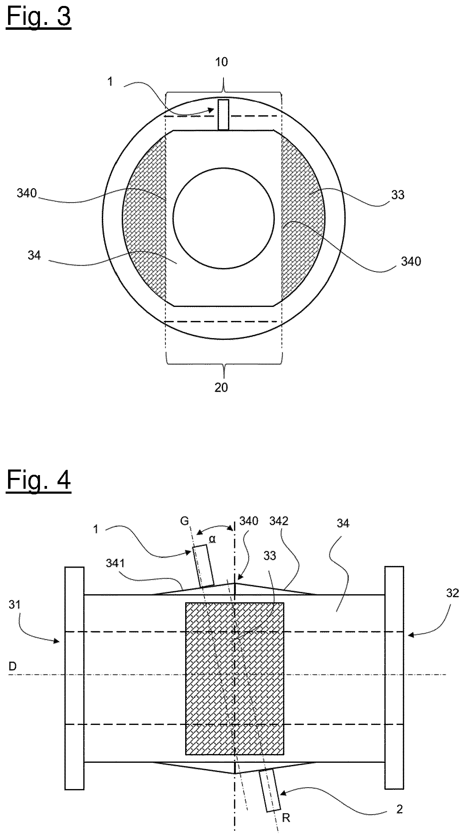

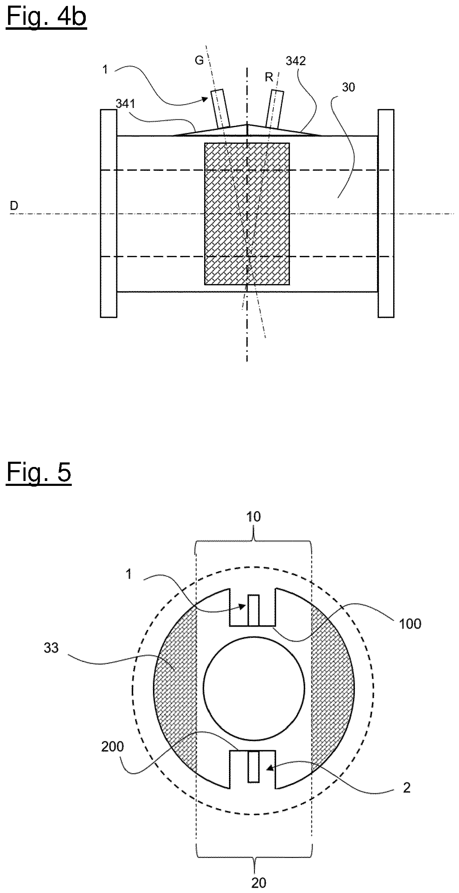

Selon le mode de réalisation illustré par les figures 3 et 4, la structure générale et la répartition des zones anéchoïque et non anéchoïque du manchon tubulaire de liaison sont conservées par rapport au mode de réalisation décrit précédemment. La variante apportée concerne la disposition des moyens de génération et des moyens de réception des impulsions ultrasonores haute fréquence.

Tel que cela apparaît sur la figure 4, les moyens de génération et les moyens de réception sont montés de façon diamétralement opposés sur le manchon tubulaire 3. Les moyens de génération 1 sont disposés selon un axe de génération G, tandis que les moyens de réception 2 sont disposés selon un axe de réception R, avec l'axe de génération G et l'axe de réception R parallèles entre eux (ou essentiellement parallèles entre eux).

De plus, l'axe de génération G et l'axe de réception R sont inclinés d'un angle α par rapport à la perpendiculaire à l'axe de déplacement D. A titre indicatif, cet angle α peut varier entre 10° et 80°.

Pour ce faire, le corps 34 présente, dans l'espace des première et deuxième zone de montage selon l'axe de déplacement D, une excroissance 340 formée par deux pans inclinés 341, 342 de pente opposée mais de même angle par rapport à l'axe de déplacement D. Les moyens de génération 1 sont portés par le pan incliné 341 et, diamétralement opposés, les moyens de réception sont portés par le pan incline 342.

La figure 4b illustre une variante de réalisation du deuxième mode de réalisation qui vient d'être décrit en référence aux figures 3 et 4. Tel que cela apparaît sur la figure 4b, les moyens de génération 1 sont portés par le pan incliné 341 et les moyens de réception sont portés par le pan incline 342, du même côté du manchon ou, en d'autres termes, au voisinage l'un de l'autre. Dans ce cas, les moyens de génération 1 sont disposés selon un axe de génération G, tandis que les moyens de réception 2 sont disposés selon un axe de réception R, avec l'axe de génération G et l'axe de réception R inclinés de façon à converger, vue en coupe transversale de côté tel qu'illustré par la figure 4b, au sein de l'évidement 30 du manchon.

La figure 5 décrit une autre variante de réalisation d'un manchon tubulaire selon l'invention, qui diffère du premier mode de réalisation décrit précédemment en ce que le manchon tubulaire présente une première cavité 100 dans la première zone de montage 10, les moyens de génération 1 étant montés à l'intérieur de cette cavité 100. Le manchon tubulaire présente en outre une deuxième cavité 200 dans la deuxième zone de montage 20, diamétralement opposée par rapport à la première cavité 100, les moyens de réception 2 étant montés à l'intérieur de cette deuxième cavité.

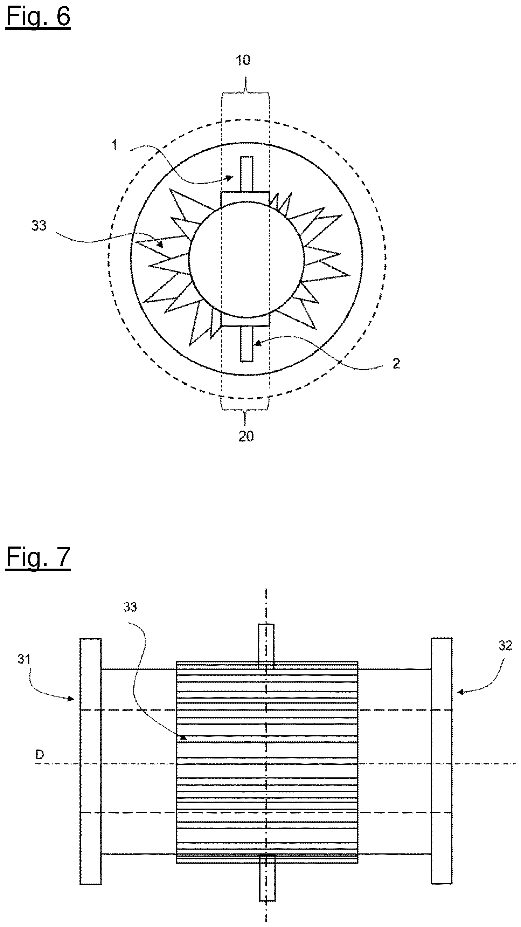

Les figures 6 et 7 illustrent encore un autre mode de réalisation d'un manchon tubulaire d'un dispositif acoustique selon l'invention qui diffère du premier mode de réalisation décrit précédemment en ce que les zones anéchoïques et non anéchoïques du manchon tubulaire sont réalisées en un même matériau. En d'autres termes, le manchon tubulaire est réalisé en un même matériau dans les première et deuxième zones de montage 10, 20 et entre les première et deuxième zone de montage, c'est-à-dire dans les zones anéchoïques 33.

Dans ce cas, le matériau du manchon tubulaire est mis en forme, par exemple par usinage de surface selon un motif d'absorption prédéterminé, de façon à présenter une pluralité de reliefs ou de motifs anéchoïques entre les première et deuxième zones de montage selon une répartition circonférentielle. De plus, ces reliefs et/ou motifs anéchoïques peuvent être répétés de part et d'autre des zones de montage 10, 20 selon l'axe de déplacement D.

## Revendications

1. Dispositif acoustique pour une mesure, localisée et sans contact, de la viscoélasticité d'un produit à analyser, du type comprenant :
- des moyens de génération (1) d'impulsions ultrasonores haute fréquence ;
- des moyens de réception (2) des impulsions ultrasonores haute fréquence générées par les moyens de génération ; les moyens de génération (1) et les moyens de réception (2) étant disposés l'un par rapport à l'autre de telle sorte que les impulsions ultrasonores haute fréquence se propagent au sein de l'échantillon à analyser ;
- un manchon tubulaire (3) de liaison destiné à raccorder ensemble deux portions de canalisation dans laquelle le produit à analyser est destiné à se déplacer d'une portion à l'autre, les moyens de génération (1) et les moyens de réception (2) étant montés sur le manchon tubulaire, le manchon tubulaire (3) comprenant une première zone de montage (10) pour les moyens de génération (1) et une deuxième zone de montage (20) pour les moyens de réception (2),
**caractérisé en ce que** le manchon tubulaire (3) est non anéchoïque dans les première et deuxième zones de montage (10), (20) et, selon une répartition circonférentielle, anéchoïque entre les première et deuxième zones de montage (10), (20).

2. Dispositif acoustique selon la revendication 1, **caractérisé en ce que** le manchon tubulaire (3) s'étend entre deux extrémités (31), (32) selon un axe de déplacement (D) du produit à analyser, les moyens de génération (1) et les moyens de réception (2) étant montés en vis-à-vis l'un de l'autre perpendiculairement à l'axe de déplacement (D).

3. Dispositif acoustique selon la revendication 1, **caractérisé en ce que** le manchon tubulaire (3) s'étend entre deux extrémités (31), (32) selon un axe de déplacement (D) du produit à analyser, les moyens de génération (1) et les moyens de réception (2) étant montés sur le manchon tubulaire (3) de façon diamétralement opposée, les moyens de génération (1) étant disposés selon un axe de génération (G) et les moyens de réception (2) étant disposés selon un axe de réception (R), l'axe de génération (G) et l'axe de réception (R) étant essentiellement parallèles entre eux.

4. Dispositif acoustique selon l'une quelconque des revendications 1 à 3, **caractérisé en ce que** le manchon tubulaire (3) présente un premier méplat (11) dans la première zone de montage (10), sur lequel sont montés les moyens de génération (1), et un deuxième méplat (21) dans la deuxième zone de montage (20), sur lequel sont montés les moyens de réception (2).

5. Dispositif acoustique selon l'une quelconque des revendications 1 à 4, **caractérisé en ce que** le manchon tubulaire (3) présente une première cavité (100) dans la première zone de montage (10), dans laquelle sont montés les moyens de génération (1), et une deuxième cavité (200) dans la deuxième zone de montage (20), dans laquelle sont montés les moyens de réception (2).

6. Dispositif acoustique selon l'une quelconque des revendications 1 à 5, **caractérisé en ce que** le manchon tubulaire (30) présente un corps (34) délimitant un évidement central (30) de circulation du produit à analyser entre les deux portions de canalisation, le corps (34) étant venu de matière avec les première et deuxième zones de montage (10), (20).

7. Dispositif acoustique selon la revendication 6, **caractérisé en ce que** le corps (34) présente un rétrécissement (340) d'épaisseur entre les première et deuxième zones de montage (10), (20).

8. Dispositif acoustique selon les revendications 6 et 7, **caractérisé en ce que** le manchon tubulaire (3) comprend au moins deux matériaux distincts, dont un matériau non anéchoïque pour les première et deuxième zones de montage (10), (20) et pour le corps (34), et un matériau anéchoïque de comblement circonférentiel entre les première et deuxième zones de montage (10), (20).

9. Dispositif acoustique selon la revendication 8, **caractérisé en ce que** le matériau anéchoïque est choisi parmi le groupe suivant :
- matériau alvéolaire ;
- matériau stratifié dont les strates composent un gradient d'impédances acoustiques ;
- matériau granulaire.

10. Dispositif acoustique selon l'une quelconque des revendications 1 à 6, **caractérisé en ce que** le manchon tubulaire (3) est réalisé en un même matériau dans les première et deuxième zones de montage (10), (20) et entre les première et deuxième zones de montage (10), (20), le matériau étant mis en forme d'une pluralité de reliefs et/ou de motifs anéchoïques entre les première et deuxième zones de montage (10), (20).

11. Dispositif acoustique selon l'une quelconque des revendications 1 à 10, **caractérisé en ce qu'**il présente à chacune de ses extrémités une collerette d'assemblage (310), (320).

## Patentansprüche

1. Akustische Vorrichtung für eine lokalisierte und berührungslose Messung der Viskoelastizität eines zu analysierenden Produkts, in der Art Folgendes umfassend:
- Mittel zum Erzeugen (1) von Ultraschallimpulsen mit hoher Trägerfrequenz;
- Mittel zum Empfangen (2) der von den Mitteln zum Erzeugen erzeugten Ultraschallimpulse mit hoher Trägerfrequenz; wobei die Mittel zum Erzeugen (1) und die Mittel zum Empfangen (2) derart zueinander angeordnet sind, dass sich die Ultraschallimpulse mit hoher Trägerfrequenz innerhalb der zu analysierenden Probe ausbreiten;
- eine rohrförmige Hülse (3) zum Verbinden, die dazu bestimmt ist, zwei Kanalisationsabschnitte, in denen das zu analysierende Produkt bestimmt ist, sich von einem Abschnitt zum anderen fortzubewegen, aneinander anzuschließen, wobei die Mittel zum Erzeugen (1) und die Mittel zum Empfangen (2) auf der rohrförmigen Hülse montiert sind, wobei die rohrförmige Hülse (3) einen ersten Montagebereich (10) für die Mittel zum Erzeugen (1), und einen zweiten Montagebereich (20) für die Mittel zum Empfangen (2) umfasst,
**dadurch gekennzeichnet, dass** die rohrförmige Hülse (3) in dem ersten und zweiten Montagebereich (10, 20) nicht schalltot ist, und gemäß einer Umfangsverteilung zwischen dem ersten und zweiten Montagebereich (10, 20) schalltot ist.

2. Akustische Vorrichtung nach Anspruch 1, **dadurch gekennzeichnet, dass** sich die rohrförmige Hülse (3) zwischen zwei Enden (31, 32) entlang einer Fortbewegungsachse (D) des zu analysierenden Produkts erstreckt, wobei die Mittel zum Erzeugen (1) und die Mittel zum Empfangen (2) einander gegenüber senkrecht zur Fortbewegungsachse (D) montiert sind.

3. Akustische Vorrichtung nach Anspruch 1, **dadurch gekennzeichnet, dass** sich die rohrförmige Hülse (3) zwischen zwei Enden (31, 32) entlang einer Fortbewegungsachse (D) des zu analysierenden Produkts erstreckt, wobei die Mittel zum Erzeugen (1) und die Mittel zum Empfangen (2) diametral entgegengesetzt auf der rohrförmigen Hülse (3) montiert sind, wobei die Mittel zum Erzeugen (1) entlang einer Achse zum Erzeugen (G) angeordnet sind, und die Mittel zum Empfangen (2) entlang einer Achse zum Empfangen (R) angeordnet sind, wobei die Achse zum Erzeugen (G) und die Achse zum Empfangen (R) im Wesentlichen parallel zueinander sind.

4. Akustische Vorrichtung nach einem der Ansprüche 1 bis 3, **dadurch gekennzeichnet, dass** die rohrförmige Hülse (3) eine erste Abflachung (11) im ersten Montagebereich (10) aufweist, auf der die Mittel zum Erzeugen (1) montiert sind, und eine zweite Abflachung (21) im zweiten Montagebereich (20), auf der die Mittel zum Empfangen (2) montiert sind.

5. Akustische Vorrichtung nach einem der Ansprüche 1 bis 4, **dadurch gekennzeichnet, dass** die rohrförmige Hülse (3) einen ersten Hohlraum (100) im ersten Montagebereich (10) aufweist, in dem die Mittel zum Erzeugen (1) montiert sind, und einen zweiten Hohlraum (200) im zweiten Montagebereich (20), in dem die Mittel zum Empfangen (2) montiert sind.

6. Akustische Vorrichtung nach einem der Ansprüche 1 bis 5, **dadurch gekennzeichnet, dass** die rohrförmige Hülse (3) einen Körper (34) aufweist, der eine zentrale Aussparung (30) zum Zirkulieren des zu analysierenden Produkts zwischen den beiden Kanalisationsabschnitten begrenzt, wobei der Körper (34) einstückig mit dem ersten und zweiten Montagebereich (10, 20) ist.

7. Akustische Vorrichtung nach Anspruch 6, **dadurch gekennzeichnet, dass** der Körper (34) eine Schrumpfung (340) der Dicke zwischen dem ersten und zweiten Montagebereich (10, 20) aufweist.

8. Akustische Vorrichtung nach den Ansprüchen 6 und 7, **dadurch gekennzeichnet, dass** die rohrförmige Hülse (3) mindestens zwei unterschiedliche Werkstoffe umfasst, darunter einen nicht schalltoten Werkstoff für den ersten und zweiten Montagebereich (10, 20) und für den Körper (34), und einen schalltoten Werkstoff zur Umfangsverfüllung zwischen dem ersten und zweiten Montagebereich (10, 20).

9. Akustische Vorrichtung nach Anspruch 8, **dadurch gekennzeichnet, dass** der schalltote Werkstoff aus der folgenden Gruppe ausgewählt wird:
- Wabenwerkstoff;
- Schichtwerkstoff, dessen Schichten einen Gradienten aus akustischen Impedanzen zusammenstellen;
- körniger Werkstoff.

10. Akustische Vorrichtung nach einem der Ansprüche 1 bis 6, **dadurch gekennzeichnet, dass** die rohrförmige Hülse (3) im ersten und zweiten Montagebereich (10, 20) und zwischen dem ersten und zweiten Montagebereich (10, 20) aus einem gleichen Werkstoff gefertigt ist, wobei der Werkstoff mit einer Vielzahl von schalltoten Reliefs und/oder Motiven zwischen dem ersten und zweiten Montagebereich (10, 20) in Form gebracht wird.

11. Akustische Vorrichtung nach einem der Ansprüche 1 bis 10, **dadurch gekennzeichnet, dass** sie an jedem ihrer Enden ein Übergangsstück zum Zusammenfügen (310, 320) aufweist.

## Claims

1. An acoustic device for localised and contactless measurement of viscoelasticity of a product to be analysed, the acoustic device comprising:
- means (1) for generating high-frequency ultrasonic pulses;
- means (2) for receiving the high-frequency ultrasonic pulses generated by the generation means; the generation means (1) and the reception means (2) being arranged with respect to one another such that the high-frequency ultrasonic pulses propagate within the sample to be analysed;
- a connecting tubular sleeve (3) intended to connect together two pipe portions in which the product to be analysed is intended to move from one portion to another, the generation means (1) and the reception means (2) being mounted on the tubular sleeve, the tubular sleeve (3) comprising a first mounting area (10) for the generation means (1) and a second mounting area (20) for the reception means (2),
**characterised in that** the tubular sleeve (3) is non-anechoic in the first and second mounting areas (10), (20) and, according to a circumferential distribution, anechoic between the first and second mounting areas (10), (20).

2. The acoustic device according to claim 1, **characterised in that** the tubular sleeve (3) extends between two ends (31), (32) according to an axis of movement (D) of the product to be analysed, the generation means (1) and the reception means (2) being mounted opposite one another perpendicularly to the axis of movement (D).

3. The acoustic device according to claim 1, **characterised in that** the tubular sleeve (3) extends between two ends (31), (32) according to an axis of movement (D) of the product to be analysed, the generation means (1) and the reception means (2) being mounted on the tubular sleeve (3) in a diametrically opposite manner, the generation means (1) being arranged according to a generation axis (G) and the reception means (2) being arranged according to a reception axis (R), the generation axis (G) and the reception axis (R) being essentially parallel to one another.

4. The acoustic device according to any one of claims 1 to 3, **characterised in that** the tubular sleeve (3) has a first flat surface (11) in the first mounting area (10), on which the generation means (1) are mounted, and a second flat surface (21) in the second mounting area (20), on which the reception means (2) are mounted.

5. The acoustic device according to any one of claims 1 to 4, **characterised in that** the tubular sleeve (3) has a first cavity (100) in the first mounting area (10), in which the generation means (1) are mounted, and a second cavity (200) in the second mounting area (20), in which the reception means (2) are mounted.

6. The acoustic device according to any one of claims 1 to 5, **characterised in that** the tubular sleeve (3) has a body (34) delimiting a central recess (30) for the circulation of the product to be analysed between the two pipe portions, the body (34) being made in one-piece with the first and second mounting areas (10), (20).

7. The acoustic device according to claim 6, **characterised in that** the body (34) has a thickness constriction (340) between the first and second mounting areas (10), (20).

8. The acoustic device according to claims 6 and 7, **characterised in that** the tubular sleeve (3) comprises at least two distinct materials, including a non-anechoic material for the first and second mounting areas (10), (20) and for the body (34), and a circumferential filler anechoic material between the first and second mounting areas (10), (20).

9. The acoustic device according to claim 8, **characterised in that** the anechoic material is selected from among the group:
- a cellular material;
- a stratified material whose strata form an acoustic impedance gradient;
- a granular material.

10. The acoustic device according to any one of claims 1 to 6, **characterised in that** the tubular sleeve (3) is made of the same material in the first and second mounting areas (10), (20) and between the first and second mounting areas (10), (20), the material being shaped with a plurality of anechoic reliefs and/or patterns between the first and second mounting areas (10), (20).

11. The acoustic device according to any one of claims 1 to 10, **characterised in that** it has an assembly collar (310), (320) at each of its ends.
